# EUROPÄISCHE PATENTANMELDUNG

(11) **EP 4 817 859 A1**
(43) Veröffentlichungstag der Anmeldung: **07.10.2026**
(21) Anmeldenummer: 25167738.1
(22) Anmeldetag: 01.04.2025
(51) Int. Cl.: B32B 1/08, B32B 7/12, B32B 15/08, B32B 27/08, B32B 27/20, B32B 27/30, B32B 27/32, B32B 27/34, F16L 9/147

(54) **KRAFTFAHRZEUG-ROHRLEITUNG UND VERFAHREN ZUR HERSTELLUNG EINER KRAFTFAHRZEUG-ROHRLEITUNG**

(71) Anmelder: TI Automotive (Fuldabrück) GmbH, 34277 Fuldabrück (DE)
(72) Erfinder: Fiedler, Uwe, 68804 Altlußheim (DE); Häckel, Andre, 34513 Waldeck (DE); Weick, Georg, 68723 Plankstadt (DE); Roeder, Manuel, 76437 Rastatt (DE); Arnold, Siegfried, 34128 Kassel (DE); Puhalla, Andreas, 76275 Ettlingen (DE)
(74) Vertreter: Andrejewski - Honke Patent- und Rechtsanwälte Partnerschaft mbB

(57) **Zusammenfassung**

Die Erfindung betrifft eine Kraftfahrzeug-Rohrleitung zur Durchleitung zumindest eines fluiden Mediums. Die Rohrleitung weist einen Fluidkanal und eine den Fluidkanal umgebende Rohrwandung auf. Die Rohrwandung weist ein Innenrohr aus zumindest einem Metall und eine das Innenrohr ummantelnde Außenschicht aus zumindest einem thermoplastischen Kunststoff auf. Zwischen dem Innenrohr und der Außenschicht ist zumindest eine Haftvermittlerschicht aus zumindest einem thermoplastischen Kunststoff angeordnet. Der zumindest eine thermoplastische Kunststoff der Haftvermittlerschicht ist haftungsmodifiziert und weist dazu zumindest eine in die Polymerstruktur eingebrachte Haftvermittlergruppe und/oder zumindest ein Haftvermittlungsadditiv auf.

## Beschreibung

Die Erfindung betrifft eine Kraftfahrzeug-Rohrleitung, insbesondere eine Bremsrohrleitung für Kraftfahrzeuge, zur Durchleitung zumindest eines fluiden Mediums, wobei die Rohrleitung einen Fluidkanal und eine den Fluidkanal umgebende Rohrwandung aufweist und wobei die Rohrwandung ein Innenrohr aus zumindest einem Metall und eine das Innenrohr ummantelnde Außenschicht aus zumindest einem thermoplastischen Kunststoff aufweist. Darüber hinaus betrifft die Erfindung ein Verfahren zur Herstellung einer solchen Kraftfahrzeug-Rohrleitung. Bei dem fluiden Medium, das durch die Kraftfahrzeug-Rohrleitung geführt wird, handelt es sich insbesondere um eine Hydraulikflüssigkeit, bevorzugt um eine Bremsflüssigkeit, beispielsweise um eine Hydraulikflüssigkeit bzw. Bremsflüssigkeit auf Polyglykol-Basis. Grundsätzlich können aber auch andere Bremsflüssigkeiten und auch andere Fluide durch den Fluidkanal der erfindungsgemäßen Kraftfahrzeug-Rohrleitung geführt werden. Nachfolgend wird anstelle des Ausdruckes Kraftfahrzeug-Rohrleitung insbesondere auch einfach der Begriff Rohrleitung verwendet.

Rohrleitungen der eingangs genannten Art und Verfahren zur Herstellung solcher Rohrleitungen sind aus der Praxis in unterschiedlichen Ausführungsformen grundsätzlich bekannt. Aufgrund der Ausgestaltung der Rohrleitungen mit einem Innenrohr aus zumindest einem Metall und einer das Innenrohr ummantelnden Außenschicht aus zumindest einem thermoplastischen Kunststoff ergeben sich oftmals Haftungsproblematiken. Zur Verbesserung der Haftung zwischen der Außenschicht und dem Innenrohr ist es aus der Praxis daher bekannt, das Innenrohr zunächst mit einer Primer-Schicht zu versehen und anschließend die Außenschicht auf diese Primer-Schicht aufzubringen. Die Primer-Schichten bestehen üblicherweise aus einem ausgehärteten, duroplastischen Epoxidharz. Die Aufbringung dieser Primer-Schichten auf das Innenrohr ist allerdings aufwendig und insbesondere auch kostenaufwendig. Im Rahmen der Aufbringung wird beispielsweise in der Regel eine verhältnismäßig große Lösungsmittelmenge benötigt. Das Lösungsmittel muss anschließend zur Fertigstellung der Primer-Schicht wieder entfernt werden. Es sind somit mehrere Arbeitsschritte erforderlich. Darüber hinaus sind die aus der Praxis bekannten Maßnahmen, insbesondere die Primer-Schichten auf Epoxidharz-Basis, aus umwelttechnischen Gesichtspunkten nachteilhaft. Insoweit besteht Verbesserungsbedarf. - Hier setzt die Erfindung ein.

Der Erfindung liegt demgegenüber das technische Problem zugrunde, eine Kraftfahrzeug-Rohrleitung der eingangs genannten Art anzugeben, bei der die vorstehend beschriebenen Nachteile vermieden werden können und bei der insbesondere die Haftung zwischen dem Innenrohr und der Außenschicht einfach und funktionssicher und vorzugsweise mit wenig aufwendigen Maßnahmen realisiert werden kann und die nichtsdestoweniger allen Anforderungen genügt. Darüber hinaus liegt der Erfindung das technische Problem zugrunde, ein Verfahren zur Herstellung einer Kraftfahrzeug-Rohrleitung anzugeben.

Zur Lösung des technischen Problems lehrt die Erfindung eine Kraftfahrzeug-Rohrleitung, insbesondere eine Bremsrohrleitung für Kraftfahrzeuge, zur Durchleitung zumindest eines fluiden Mediums, wobei die Rohrleitung einen Fluidkanal und eine den Fluidkanal umgebende Rohrwandung aufweist, wobei die Rohrwandung ein Innenrohr aus zumindest einem Metall und eine das Innenrohr ummantelnde Außenschicht aus zumindest einem thermoplastischen Kunststoff aufweist, wobei zwischen dem Innenrohr und der Außenschicht zumindest eine Haftvermittlerschicht aus zumindest einem thermoplastischen Kunststoff angeordnet ist, dadurch gekennzeichnet, dass der zumindest eine thermoplastische Kunststoff der Haftvermittlerschicht haftungsmodifiziert ist und dazu zumindest eine in die Polymerstruktur eingebrachte Haftvermittlergruppe und/oder zumindest ein Haftvermittlungsadditiv aufweist. Der zumindest eine thermoplastische Kunststoff der zumindest einen Haftvermittlerschicht ist erfindungsgemäß ein haftungsmodifizierter thermoplastischer Kunststoff. Haftungsmodifizierter thermoplastischer Kunststoff meint im Rahmen der Erfindung somit insbesondere einen thermoplastischen Kunststoff, der zumindest eine in die Polymerstruktur eingebrachte Haftvermittlergruppe und/oder zumindest ein Haftvermittlungsadditiv aufweist.

Der Erfindung liegt die Erkenntnis zugrunde, dass die erfindungsgemäße Kraftfahrzeug-Rohrleitung im Hinblick auf die Haftung zwischen der Außenschicht und dem Innenrohr - aufgrund der erfindungsgemäß zwischengeschalteten zumindest einen Haftvermittlerschicht aus zumindest einem haftungsmodifizierten thermoplastischen Kunststoff - allen Anforderungen genügt. Durch die Haftungsmodifizierung des zumindest einen thermoplastischen Kunststoffes der Haftvermittlerschicht mittels zumindest einer in die Polymerstruktur eingebrachten Haftvermittlergruppe und/oder mittels zumindest eines Haftvermittlungsadditives kann die Haftung zwischen dem Innenrohr und der Außenschicht funktionssicher und auf wenig aufwendige Weise gewährleistet werden. Dabei kann insbesondere auf den Einsatz von Primer-Schichten, beispielsweise auf Epoxidharz-Basis, verzichtet werden. Das ist sowohl aus fertigungstechnischen Gründen als auch aus Kostengründen und umwelttechnischen Aspekten sehr vorteilhaft.

Dass der zumindest eine thermoplastische Kunststoff der Haftvermittlerschicht mittels zumindest einer in die Polymerstruktur eingebrachten Haftvermittlergruppe haftungsmodifiziert ist, meint im Rahmen der Erfindung insbesondere, dass die Polymerstruktur des thermoplastischen Kunststoffes der Haftvermittlerschicht durch Einbringung zumindest einer Haftvermittlergruppe in die Polymerstruktur chemisch modifiziert ist. Die zumindest eine Haftvermittlergruppe kann insbesondere durch Copolymerisation und/oder durch Pfropfcopolymerisation und/oder durch Substitution in die Polymerstruktur eingebracht sein. Dass der zumindest eine thermoplastische Kunststoff der Haftvermittlerschicht mittels zumindest eines Haftvermittlungsadditives haftungsmodifiziert ist, meint im Rahmen der Erfindung insbesondere, dass dem thermoplastischen Kunststoff der Haftvermittlerschicht zumindest ein Haftvermittlungsadditiv zugesetzt ist.

Erfindungsgemäß weist die Rohrwandung ein Innenrohr aus zumindest einem Metall auf. Bevorzugt ist das Innenrohr auf Basis von zumindest einem Metall ausgebildet und weiter bevorzugt besteht das Innenrohr aus zumindest einem Metall bzw. im Wesentlichen aus zumindest einem Metall. Gemäß einer Ausführungsform ist das Innenrohr auf Basis zumindest einer Legierung ausgebildet und im Rahmen dieser Ausführungsform ist es bevorzugt, dass das Innenrohr aus zumindest einer Legierung besteht bzw. im Wesentlichen besteht.

Es ist bevorzugt, dass das Innenrohr Aluminium und/oder Zink und/oder Eisen enthält, wobei das Innenrohr bevorzugt auf Basis von Aluminium und/oder auf Basis von Zink und/oder auf Basis von Eisen, insbesondere auf Basis von Stahl, ausgebildet ist, wobei das Innenrohr sehr bevorzugt aus Aluminium und/oder aus Zink und/oder aus Eisen, insbesondere aus Stahl, besteht bzw. im Wesentlichen besteht und wobei das Innenrohr ganz besonders bevorzugt aus Aluminium besteht bzw. im Wesentlichen besteht. Es ist bevorzugt, dass das Innenrohr aus einer Aluminiumlegierung besteht bzw. im Wesentlichen besteht. Ganz besonders bevorzugt besteht das Innenrohr aus Aluminium und/oder aus einer Aluminiumlegierung bzw. besteht im Wesentlichen aus Aluminium und/oder aus einer Aluminiumlegierung.

Dass eine Wandungskomponente - insbesondere das Innenrohr und/oder die zumindest eine Haftvermittlerschicht und/oder die Außenschicht - der Rohrleitung "auf Basis" eines Materials ausgebildet ist, meint im Rahmen der Erfindung insbesondere, dass die Wandungskomponente dieses Material zu mindestens 50 Gew.-% enthält. Wenn hier und nachfolgend davon die Rede ist, dass eine Wandungskomponente der Rohrleitung aus einem Material "im Wesentlichen besteht", meint dies insbesondere, dass die Wandungskomponente zu mindestens 93 Gew.-%, vorzugsweise zu mindestens 95 Gew.-%, bevorzugt zu mindestens 96 Gew.-%, weiter bevorzugt zu mindestens 97 Gew.-%, sehr bevorzugt zu mindestens 98 Gew.-% und ganz besonders bevorzugt zu mindestens 99 Gew.-% aus dem Material besteht. Das trägt insbesondere dem Umstand Rechnung, dass neben dem genannten Material noch Additive in geringem Umfang vorhanden sein können.

Gemäß einer empfohlenen Ausführungsform der erfindungsgemäßen Rohrleitung steht das Innenrohr in direktem Kontakt zu dem in dem Fluidkanal geführten Fluid. Zweckmäßigerweise bildet also das Innenrohr nach innen hin den Abschluss der Rohrleitung. Es ist aber grundsätzlich auch möglich, dass nach innen hin anschließend an das Innenrohr zusätzliche Schichten bzw. Wandungskomponenten vorgesehen sind. Es ist weiter bevorzugt, dass die Außenschicht die nach außen hin abschließende Schicht der erfindungsgemäßen Rohrleitung bildet. Grundsätzlich können nach außen hin an die Außenschicht aber auch weitere äußere Schichten anschließen. Es ist weiter bevorzugt, dass die zumindest eine erfindungsgemäße Haftvermittlerschicht nach außen hin an das Innenrohr anschließt. Die zumindest eine Haftvermittlerschicht steht dann in direktem Kontakt zu dem Innenrohr und somit berühren sich in dieser bevorzugten Ausführungsform vorzugsweise das Innenrohr und die zumindest eine Haftvermittlerschicht. Weiter bevorzugt schließt die Außenschicht nach außen hin an die zumindest eine Haftvermittlerschicht an. In einer solchen bevorzugten Ausgestaltung berühren sich somit vorzugsweise die Haftvermittlerschicht und die Außenschicht. Grundsätzlich ist es aber möglich, dass zwischen dem Innenrohr und der Haftvermittlerschicht und/oder zwischen der Haftvermittlerschicht und der Außenschicht weitere Schichten angeordnet sind. Es ist insbesondere auch möglich, dass die erfindungsgemäße Rohrleitung zumindest zwei oder zumindest drei Haftvermittlerschichten, insbesondere erfindungsgemäße Haftvermittlerschichten, aufweist. Gemäß sehr bevorzugter Ausführungsform der Erfindung weist die Rohrleitung ein dreischichtiges Aggregat aus dem Innenrohr, einer nach außen hin an das Innenrohr anschließenden Haftvermittlerschicht und einer nach außen hin an die Haftvermittlerschicht anschließende Außenschicht ohne Zwischenschaltung weiterer Schichten auf. Durch den entsprechenden direkten Kontakt zwischen dem Innenrohr und der erfindungsgemäßen Haftvermittlerschicht sowie zwischen der erfindungsgemäßen Haftvermittlerschicht und der Außenschicht kann die Haftung der Außenschicht auf dem Innenrohr sehr funktionssicher realisiert werden.

Eine ganz besonders bevorzugte Ausführungsform der Erfindung ist dadurch gekennzeichnet, dass der zumindest eine thermoplastische Kunststoff der Außenschicht zumindest ein Polypropylen, insbesondere zumindest ein Homo-Polypropylen und/oder zumindest ein Polypropylen-Copolymer ist. Es ist bevorzugt, dass die Außenschicht aus dem zumindest einen Polypropylen besteht bzw. im Wesentlichen besteht.

Eine sehr bevorzugte Ausführungsform der erfindungsgemäßen Rohrleitung ist dadurch gekennzeichnet, dass der zumindest eine thermoplastische Kunststoff der Außenschicht zumindest ein Polyamid ist, insbesondere zumindest ein aus der Gruppe: "Polyamid 6, Polyamid 10, Polyamid 11, Polyamid 12, Polyamid 6.6, Polyamid 6.10, Polyamid 6.12, Polyamid 6.16, Polyamid 10.10" ausgewähltes Polyamid ist, bevorzugt Polyamid 6.12 und/oder Polyamid 12 ist. Es ist bevorzugt, dass die Außenschicht aus dem zumindest einen Polyamid besteht bzw. im Wesentlichen besteht. Gemäß sehr bevorzugter Ausführungsform ist der zumindest eine thermoplastische Kunststoff der Außenschicht Polyamid 6.12 und/oder Polyamid 12 und ganz besonders bevorzugt besteht die Außenschicht aus Polyamid 6.12 und/oder aus Polyamid 12 bzw. besteht im Wesentlichen daraus.

Es ist sehr bevorzugt, dass der zumindest eine thermoplastische Kunststoff der Außenschicht zumindest ein Polypropylen und/oder zumindest ein Polyamid, insbesondere Polyamid 6.12 und/oder Polyamid 12, ist. Sehr bevorzugt besteht die Außenschicht aus dem zumindest einen Polypropylen und/oder aus dem zumindest einen Polyamid, insbesondere aus Polyamid 6.12 und/oder Polyamid 12, bzw. besteht im Wesentlichen daraus.

Es ist bevorzugt, dass der zumindest eine thermoplastische Kunststoff der Außenschicht zumindest ein Kunststoff-Rezyklat, insbesondere zumindest ein Rezyklat des thermoplastischen Kunststoffes der Außenschicht, enthält. Wenn der thermoplastische Kunststoff der Außenschicht beispielsweise gemäß bevorzugter Ausführungsform Polyamid 6.12 und/oder Polyamid 12 ist, dann enthält der thermoplastische Kunststoff vorzugsweise Polyamid 6.12-Rezyklat und/oder Polyamid 12-Rezyklat. Der thermoplastische Kunststoff der Außenschicht enthält zweckmäßigerweise zumindest 1 Gew.-%, vorzugsweise zumindest 5 Gew.-%, bevorzugt zumindest 10 Gew.-%, weiter bevorzugt zumindest 20 Gew.-%, sehr bevorzugt zumindest 30 Gew.-% des Rezyklates. Rezyklat meint insbesondere einen thermoplastischen Kunststoff, der bereits ein Herstellungsverfahren zu einem Produkt, beispielsweise zu einem Zwischenprodukt oder Endprodukt, durchlaufen hat und als Kunststoffabfall recycelt wird. Es ist auch möglich, dass es sich um einen thermoplastischen Kunststoff handelt, der während eines Herstellungsprozesses Ausschluss dargestellt hat. Der Ausdruck Rezyklat umfasst im Rahmen der Erfindung insbesondere Kunststoffabfälle aus industrieller Herstellung (Post-Industrielles-Rezyklat, PIR) und/oder Endverbraucher-Rezyklate (Post-Consumer-Rezyklat, PCR).

Es ist bevorzugt, dass der zumindest eine thermoplastische Kunststoff der Außenschicht auf Basis pflanzlicher bzw. nachwachsender Rohstoffe erzeugt ist. Bevorzugt ist der zumindest eine thermoplastische Kunststoff der Außenschicht auf Basis von Biomasse erzeugt. Weiter bevorzugt ist der zumindest eine thermoplastische Kunststoff der Außenschicht ausschließlich bzw. im Wesentlichen ausschließlich auf Basis pflanzlicher bzw. nachwachsender Rohstoffe, insbesondere ausschließlich bzw. im Wesentlichen ausschließlich auf Basis von Biomasse, erzeugt.

Es ist im Rahmen der Erfindung sehr bevorzugt, dass der zumindest eine thermoplastische Kunststoff der Haftvermittlerschicht zumindest ein Polypropylen, insbesondere zumindest ein Homo-Polypropylen und/oder zumindest ein Polypropylen-Copolymer, ist. Im Rahmen dieser bevorzugten Ausführungsform ist das Polypropylen, insbesondere das Homo-Polypropylen und/oder das Polypropylen-Copolymer, der Haftvermittlerschicht haftungsmodifiziert. Es ist sehr bevorzugt, dass die Haftvermittlerschicht aus dem haftungsmodifizierten thermoplastischen Kunststoff, insbesondere aus dem haftungsmodifizierten Polypropylen, vorzugsweise aus dem haftungsmodifizierten Homo-Polypropylen und/oder aus dem haftungsmodifizierten Polypropylen-Copolymer, besteht bzw. im Wesentlichen besteht.

Gemäß einer bevorzugten Ausführungsform der Erfindung ist der zumindest eine thermoplastische Kunststoff der Haftvermittlerschicht zumindest ein Polyamid, insbesondere zumindest ein aus der Gruppe: "Polyamid 6, Polyamid 10, Polyamid 11, Polyamid 12, Polyamid 6.6, Polyamid 6.10, Polyamid 6.12, Polyamid 6.16, Polyamid 10.10" ausgewähltes Polyamid und bevorzugt Polyamid 6.12 und/oder Polyamid 12. Im Rahmen dieser bevorzugten Ausführungsform ist das Polyamid der Haftvermittlerschicht haftungsmodifiziert. Es ist besonders bevorzugt, dass die Haftvermittlerschicht aus dem zumindest einen haftungsmodifizierten thermoplastischen Kunststoff, insbesondere aus dem haftungsmodifizierten Polyamid, vorzugsweise aus dem haftungsmodifizierten Polyamid 6.12 und/oder aus dem haftungsmodifizierten Polyamid 12, besteht bzw. im Wesentlichen besteht.

Es ist sehr bevorzugt, dass der zumindest eine thermoplastische Kunststoff der Haftvermittlerschicht zumindest ein Polypropylen und/oder zumindest ein Polyamid, insbesondere Polyamid 6.12 und/oder Polyamid 12, ist. Ganz besonders bevorzugt besteht die Haftvermittlerschicht aus dem zumindest einen haftungsmodifizierten Polypropylen und/oder aus dem zumindest einen haftungsmodifizierten Polyamid, insbesondere aus dem haftungsmodifizierten Polyamid 6.12 und/oder aus dem haftungsmodifizierten Polyamid 12, bzw. besteht im Wesentlichen daraus.

Wenn gemäß bevorzugter Ausführungsform der Erfindung der zumindest eine thermoplastische Kunststoff der Außenschicht zumindest ein Polypropylen ist und wenn die Außenschicht besonders bevorzugt aus dem zumindest einen Polypropylen besteht bzw. im Wesentlichen besteht, ist es sehr bevorzugt, dass der zumindest eine thermoplastische Kunststoff der Haftvermittlerschicht zumindest ein Polypropylen ist. Weiter bevorzugt ist in diesem Zusammenhang, dass die Haftvermittlerschicht dann aus dem zumindest einen haftungsmodifizierten Polypropylen besteht bzw. im Wesentlichen besteht. Dadurch - insbesondere durch die Sortenreinheit - kann eine weitere Verbesserung der Haftung zwischen der Haftvermittlerschicht und der Außenschicht realisiert werden.

Wenn gemäß bevorzugter Ausführungsform der Erfindung der zumindest eine thermoplastische Kunststoff der Außenschicht zumindest ein Polyamid ist und wenn die Außenschicht besonders bevorzugt aus dem zumindest einen Polyamid besteht bzw. im Wesentlichen besteht ist es sehr bevorzugt, dass der zumindest eine thermoplastische Kunststoff der Haftvermittlerschicht zumindest ein Polyamid ist. Weiter bevorzugt ist in diesem Zusammenhang, dass die Haftvermittlerschicht dann aus zumindest einem haftungsmodifizierten Polyamid besteht bzw. im Wesentlichen besteht. Dadurch kann - insbesondere durch die Sortenreinheit - eine weitere Verbesserung der Haftung zwischen der Haftvermittlerschicht und der Außenschicht realisiert werden.

Erfindungsgemäß ist der zumindest eine thermoplastische Kunststoff der Haftvermittlerschicht haftungsmodifiziert und weist dazu zumindest eine in die Polymerstruktur eingebrachte Haftvermittlergruppe und/oder zumindest ein Haftvermittlungsadditiv auf. Es ist sehr bevorzugt, dass das zumindest eine Haftvermittlungsadditiv zumindest ein aus der Gruppe: "Silane, halogenierte Polyolefine, insbesondere chlorierte Polyolefine, Acrylat-modifizierte Polyolefine, insbesondere Acrylat-modifiziertes Polypropylen und/oder Acrylat-modifiziertes Polyethylen" ausgewähltes Haftvermittlungsadditiv ist. Mit einer Haftvermittlerschicht, bei der der thermoplastische Kunststoff zumindest ein entsprechendes Haftvermittlungsadditiv aufweist, kann eine besonders funktionssichere Haftung zwischen dem Innenrohr und der Außenschicht realisiert werden. Gemäß bevorzugter Ausführungsform ist das zumindest eine Haftvermittlungsadditiv zumindest ein Silan und/oder zumindest ein halogeniertes Polyolefin und/oder zumindest ein Acrylat-modifiziertes Polyolefin. Wenn das zumindest eine Haftvermittlungsadditiv ein halogeniertes Polyolefin, insbesondere ein chloriertes Polyolefin ist, handelt es sich dabei bevorzugt um chloriertes Polypropylen und/oder um chloriertes Polyethylen.

Gemäß einer sehr bevorzugten Ausführungsform der Erfindung ist das zumindest eine Haftvermittlungsadditiv zumindest ein Silan, wobei das Silan vorzugsweise zumindest ein aus der Gruppe: "Aminosilane, Epoxysilane, Vinylsilane" ausgewähltes Silan ist. Bevorzugt ist das zumindest eine Haftvermittlungsadditiv zumindest ein Aminosilan und/oder zumindest ein Epoxysilan und/oder zumindest ein Vinylsilan. Silane haben sich als Haftvermittlungsadditiv zur Haftungsmodifizierung des zumindest einen thermoplastischen Kunststoffes der Haftvermittlerschicht besonders bewährt und die Verwendung von Silanen, insbesondere von Aminosilanen und/oder Epoxysilanen und/oder Vinylsilanen als Haftvermittlungsadditiv ermöglicht eine besonders funktionssichere Haftung zwischen dem Innenrohr und der Außenschicht aufgrund der zwischengeschalteten Haftvermittlerschicht. Silane ermöglichen im Hinblick auf die Haftung insbesondere sehr vorteilhafte Wechselwirkungen zwischen dem Innenrohr und der Haftvermittlerschicht einerseits und insbesondere auch zwischen der Haftvermittlerschicht und der Außenschicht andererseits.

Im Rahmen der Erfindung ist es sehr bevorzugt, dass das zumindest eine Haftvermittlungsadditiv zumindest ein organofunktionelles Silan ist. Wenn das zumindest eine Haftvermittlungsadditiv gemäß bevorzugter Ausführungsform zumindest ein Aminosilan ist, ist es sehr bevorzugt, dass es sich um ein difunktionelles Aminosilan und/oder um ein trifunktionelles Aminosilan handelt. Sehr bevorzugt ist das Aminosilan N-(2-Aminoethyl)-3-Aminopropylmethyldimethoxysilan und/oder (3-Aminopropyl)triethoxysilan und/oder (3-Aminopropyl)trimethoxysilan. Diese Silane haben sich im Hinblick auf die Haftung zwischen Innenrohr und Außenschicht besonders bewährt. Wenn das zumindest eine Haftvermittlungsadditiv gemäß bevorzugter Ausführungsform zumindest ein Epoxysilan ist, ist es bevorzugt, dass es sich dabei um (3-Glycidyloxypropyl)trimethoxysilan und/oder (3-Glycidyloxypropyl)triethoxysilan handelt. Diese Silane haben sich im Hinblick auf die Haftung zwischen Innenrohr und Außenschicht besonders bewährt. Wenn das zumindest eine Haftvermittlungsadditiv gemäß bevorzugter Ausführungsform zumindest ein Vinylsilan ist, ist es sehr bevorzugt, dass es sich dabei um Vinyltrimethoxysilan und/oder um Vinyltriethoxysilan handelt. Diese Silane haben sich im Hinblick auf die Haftung zwischen Innenrohr und Außenschicht besonders bewährt.

Gemäß einer sehr bevorzugten Ausführungsform der erfindungsgemäßen Rohrleitung enthält der thermoplastische Kunststoff der Haftvermittlerschicht 0,1 bis 8,0 Gew.-%, insbesondere 0,2 bis 6,0 Gew.-%, vorzugsweise 0,3 bis 5,0 Gew.-%, bevorzugt 0,35 bis 4,0 Gew.-%, besonders bevorzugt 0,4 bis 3,5 Gew.-%, sehr bevorzugt 0,5 bis 3,0 Gew.-%, des zumindest einen Haftvermittlungsadditives. Dieser Ausführungsform liegt die Erkenntnis zugrunde, dass mit einem verhältnismäßig geringen Anteil des Haftvermittlungsadditives nichtsdestoweniger eine funktionssichere Haftungsmodifizierung des thermoplastischen Kunststoffes der Haftvermittlerschicht erreicht werden kann und dass auf diese Weise eine sehr vorteilhafte Haftung zwischen dem Innenrohr und der Außenschicht mittels der erfindungsgemäßen Haftvermittlerschicht realisiert werden kann. Bevorzugt besteht die Haftvermittlerschicht aus dem thermoplastischen Kunststoff bzw. aus dem haftungsmodifizierten thermoplastischen Kunststoff.

Gemäß einer bevorzugten Ausführungsform der Erfindung weist der zumindest eine thermoplastische Kunststoff der Haftvermittlerschicht zumindest einen Füllstoff auf, wobei der zumindest eine Füllstoff bevorzugt ein Siliziumdioxid, insbesondere in Form von Siliziumdioxid-Nanopartikeln, und/oder ein Nanokompositmaterial ist. Bevorzugt weist der thermoplastische Kunststoff der Haftvermittlerschicht 0,5 Gew.-% bis 10 Gew.-%, vorzugsweise 1,0 Gew.-% bis 5 Gew.-%, bevorzugt 1,5 Gew.-% bis 3,5 Gew.-%, des zumindest einen Füllstoffes auf. Dieser Ausführungsform liegt die Erkenntnis zugrunde, dass mit dem zumindest einen Füllstoff, den der haftungsmodifizierte thermoplastische Kunststoff der Haftvermittlerschicht bevorzugt zusätzlich aufweist, die Haftung zwischen dem Innenrohr und der Außenschicht weiter verbessert werden kann. Dabei werden die Füllstoffe insbesondere in die von dem thermoplastischen Kunststoff gebildete Matrix eingebettet, um die Oberflächenenergie des thermoplastischen Kunststoffes zu erhöhen und auf diese Weise zu einer weiteren Haftungsverbesserung zwischen der Außenschicht und dem Innenrohr beizutragen. Es liegt auch im Rahmen der Erfindung, dass das zumindest eine Haftvermittlungsadditiv selbst ein Siliziumdioxid, insbesondere in Form von Siliziumdioxid-Nanopartikeln, ist und/oder ein Nanokompositmaterial ist.

Erfindungsgemäß ist der zumindest eine thermoplastische Kunststoff der Haftvermittlerschicht haftungsmodifiziert und weist dazu zumindest eine in die Polymerstruktur eingebrachte Haftvermittlergruppe und/oder zumindest ein Haftvermittlungsadditiv auf. Es möglich, dass die zumindest eine Haftvermittlergruppe des thermoplastischen Kunststoffes der Haftvermittlerschicht zumindest eine Hydroxy-Gruppe und/oder zumindest eine Acrylsäure-Gruppe und/oder zumindest eine Acrylsäurederivat-Gruppe und/oder zumindest eine Maleinsäure-Gruppe und/oder zumindest eine Maleinsäurederivat-Gruppe und/oder zumindest eine Halogenid-Gruppe und/oder zumindest eine Silan-Gruppe enthält.

Es ist bevorzugt, dass die zumindest eine Haftvermittlergruppe des thermoplastischen Kunststoffes der Haftvermittlerschicht ausgewählt ist aus der Gruppe: "Hydroxygruppe, Acrylsäure, Acrylsäurederivat, insbesondere Acrylat, Maleinsäure, Maleinsäurederivat, insbesondere Maleinsäureanhydrid, Halogenid, Silan". Die zumindest eine Haftvermittlergruppe ist gemäß bevorzugter Ausführungsform durch Copolymerisation und/oder Pfropfcopolymerisation und/oder Substitution in die Polymerstruktur des zumindest einen thermoplastischen Kunststoffes der Haftvermittlerschicht eingebracht. Sehr bevorzugt ist die zumindest eine Haftvermittlergruppe des thermoplastischen Kunststoffes der Haftvermittlerschicht zumindest eine Hydroxy-Gruppe und/oder zumindest eine Acrylsäure-Gruppe und/oder zumindest eine Acrylsäurederivat-Gruppe und/oder zumindest eine Maleinsäure-Gruppe und/oder zumindest eine Maleisäurederivat-Gruppe und/oder zumindest eine Maleinsäureanhydrid-Gruppe und/oder zumindest eine Halogenid-Gruppe und/oder zumindest eine Silan-Gruppe. Gemäß einer Ausführungsform ist der thermoplastische Kunststoff der Haftvermittlerschicht mit Maleinsäureanhydrid gepfropft. Gemäß einer bevorzugten Ausführungsform handelt es sich bei dem zumindest einen haftungsmodifizierten thermoplastischen Kunststoff der Haftvermittlerschicht um Maleinsäureanhydrid-gepfropftes Polypropylen.

Die Einbringung der vorstehend genannten Haftvermittlergruppen in die Polymerstruktur des thermoplastischen Kunststoffes der Haftvermittlerschicht ermöglicht im Hinblick auf die Haftung vorteilhafte Wechselwirkungen zwischen der Haftvermittlerschicht und dem Innenrohr und insbesondere auch zwischen der Haftvermittlerschicht und der Außenschicht.

Es ist bevorzugt, dass die Wandungsdicke des Innenrohres größer ist als die Schichtdicke der Außenschicht. Es ist weiter bevorzugt, dass die Wandungsdicke des Innenrohres größer ist als die Schichtdicke der Haftvermittlerschicht. Gemäß bevorzugter Ausführungsform ist die Schichtdicke der Außenschicht größer als die Schichtdicke der Haftvermittlerschicht. Die Haftvermittlerschicht weist somit vorzugsweise eine geringere Schichtdicke auf als die Schichtdicke der Außenschicht und/oder als die Wandungsdicke des Innenrohres. Mit den Ausdrücken Wandungsdicke und Schichtdicke ist im Rahmen der Erfindung insbesondere die größte Ausdehnung des Rohrs bzw. der entsprechenden Schicht quer, insbesondere senkrecht bzw. im Wesentlichen senkrecht, zur Längsrichtung der Rohrleitung gemeint.

Gemäß einer bevorzugten Ausführungsform der erfindungsgemäßen Rohrleitung beträgt die Schichtdicke der Haftvermittlerschicht 7 µm bis 300 µm, vorzugsweise 10 µm bis 200 µm, bevorzugt 12 µm bis 100 µm, sehr bevorzugt 12 µm bis 50 µm, besonders bevorzugt 15 µm bis 40 µm. Sehr bevorzugt beträgt die Schichtdicke der Haftvermittlerschicht mehr als 1 µm, insbesondere mehr als 3 µm, vorzugsweise mehr als 5 µm, bevorzugt mehr als 7 µm, sehr bevorzugt mehr als 10 µm, besonders bevorzugt mehr als 12 µm, ganz besonders bevorzugt mehr als 15 µm, beispielsweise mehr als 20 µm und/oder weniger als 300 µm, insbesondere weniger als 250 µm, vorzugsweise weniger als 200 µm, bevorzugt weniger als 150 µm, weiter bevorzugt weniger als 100 µm, sehr bevorzugt weniger als 80 µm, sehr bevorzugt weniger als 50 µm, besonders bevorzugt weniger als 40 µm, ganz besonders bevorzugt weniger als 30 µm.

Es ist bevorzugt, dass die Schichtdicke der Außenschicht 50 µm bis 300 µm, vorzugsweise 80 µm bis 250 µm, bevorzugt 100 µm bis 200 µm, besonders bevorzugt 150 µm bis 180 µm beträgt.

Es ist bevorzugt, dass das Innenrohr eine Wandungsdicke von 500 µm bis 1500 µm, bevorzugt von 600 µm bis 1200 µm, sehr bevorzugt von 650 µm bis 1100 µm, besonders bevorzugt von 680 µm bis 1050 µm, aufweist.

Es ist im Rahmen der Erfindung besonders bevorzugt, dass die Gesamtdicke d der Rohrwandung 500 µm bis 2000 µm, vorzugsweise 700 µm bis 1500 µm, bevorzugt 750 µm bis 1300 µm, besonders bevorzugt 800 µm bis 1200 µm, beträgt. Gesamtdicke d der Rohrwandung meint dabei insbesondere die größte Ausdehnung der Gesamtheit der Schichten der Rohrwandung inklusive der Wandungsdicke des Innenrohres quer, insbesondere senkrecht bzw. im Wesentlichen senkrecht, zur Längsrichtung der Rohrleitung.

Gemäß besonders empfohlener Ausführungsform der Erfindung beträgt die Wandungsdicke des Innenrohres 55 % bis 95 %, vorzugsweise 65 % bis 90 %, bevorzugt 75 % bis 85 % der Gesamtdicke d der Rohrwandung. Sehr bevorzugt beträgt die Schichtdicke der Außenschicht 5 % bis 30 %, vorzugsweise 10 % bis 25 %, bevorzugt 12 % bis 22 %, sehr bevorzugt 13 % bis 20 % der Gesamtdicke d der Rohrwandung. Es ist besonders bevorzugt, dass die Schichtdicke der Haftvermittlerschicht 0,5 bis 8,0 %, bevorzugt 1,0 % bis 7,0 %, sehr bevorzugt 1,5 % bis 5,0 %, besonders bevorzugt 2,0 % bis 4,0 % der Gesamtdicke d der Rohrwandung beträgt.

Es ist bevorzugt, dass die Haftvermittlerschicht auf das Innenrohr aufextrudiert ist und/oder dass die Außenschicht auf die Haftvermittlerschicht aufextrudiert ist. Sehr bevorzugt sind die Haftvermittlerschicht und die Außenschicht auf das Innenrohr coextrudiert.

Zur Lösung des technischen Problems lehrt die Erfindung außerdem die Verwendung einer erfindungsgemäßen Kraftfahrzeug-Rohrleitung als Bremsrohrleitung in einem Kraftfahrzeug.

Zur Lösung des technischen Problems lehrt die Erfindung weiterhin ein Verfahren zur Herstellung einer Kraftfahrzeug-Rohrleitung, insbesondere einer oben stehend beschriebenen Kraftfahrzeug-Rohrleitung, wobei ein Innenrohr aus zumindest einem Metall bereitgestellt wird, wobei auf eine Außenoberfläche des Innenrohres zumindest eine Haftvermittlerschicht aus zumindest einem thermoplastischen Kunststoff aufextrudiert wird, wobei der zumindest eine thermoplastische Kunststoff der Haftvermittlerschicht haftungsmodifiziert ist und dazu zumindest eine in die Polymerstruktur eingebrachte Haftvermittlergruppe und/oder zumindest ein Haftvermittlungsadditiv aufweist und wobei auf eine Außenoberfläche der Haftvermittlerschicht zumindest eine Außenschicht aus zumindest einem thermoplastischen Kunststoff aufgebracht, insbesondere aufextrudiert, wird und wobei die Haftvermittlerschicht und die Außenschicht bevorzugt coextrudiert werden.

Im Rahmen des erfindungsgemäßen Verfahrens wird die zumindest eine Haftvermittlerschicht auf das Innenrohr aufextrudiert und wird die zumindest eine Außenschicht bevorzugt auf die Haftvermittlerschicht aufextrudiert. Das ist mit besonderen Vorteilen im Hinblick auf die Fertigung der Rohrleitung verbunden, denn die bisher aus der Praxis bekannten aufwendigen Schritte zur Auftragung einer Primer-Schicht können im Rahmen des erfindungsgemäßen Verfahrens vermieden werden. Gemäß bevorzugter Ausführungsform des erfindungsgemäßen Verfahrens werden die Haftvermittlerschicht und die Außenschicht coextrudiert und insbesondere auf das Innenrohr coextrudiert.

Der Erfindung liegt die Erkenntnis zugrunde, dass die erfindungsgemäße Kraftfahrzeug-Rohrleitung sich durch eine sehr funktionssichere Haftung zwischen dem Innenrohr und der Außenschicht auszeichnet, die durch die erfindungsgemäße, zwischen dem Innenrohr und der Außenschicht angeordnete bzw. zwischengeschaltete, zumindest eine Haftvermittlerschicht aus zumindest einem thermoplastischen Kunststoff realisiert wird, wobei der zumindest eine thermoplastische Kunststoff der Haftvermittlerschicht haftungsmodifiziert ist. Durch die erfindungsgemäße Haftvermittlerschicht aus zumindest einem haftungsmodifizierten thermoplastischen Kunststoff können die aus der Praxis bekannten Maßnahmen, bei der in aufwendiger Weise eine Primer-Schicht, beispielsweise aus einem duroplastischen Epoxidharz, aufgebracht werden muss, vermieden werden. Erfindungsgemäß wird eine Haftvermittlerschicht aus zumindest einem haftungsmodifizierten thermoplastischen Kunststoff verwendet und auf diese Weise kann einfach und funktionssicher die Haftung zwischen der Außenschicht und dem Innenrohr sichergestellt werden. Haftungsproblematiken zwischen der Außenschicht und dem Innenrohr können auf diese Weise sehr zuverlässig vermieden werden. Zur Haftungsmodifizierung weist der thermoplastische Kunststoff der Haftvermittlerschicht zumindest eine in die Polymerstruktur eingebrachte Haftvermittlergruppe und/oder zumindest ein Haftvermittlungsadditiv auf. Die Haftvermittlerschicht ist gemäß bevorzugter Ausführungsform auf das Innenrohr aufextrudiert. Gemäß weiter bevorzugter Ausführungsform ist die Außenschicht auf die Haftvermittlerschicht aufextrudiert. Die erfindungsgemäße Rohrleitung zeichnet sich insoweit vorzugsweise durch eine sehr einfache Fertigung aus und ist insbesondere wenig aufwendig und auch wenig kostenaufwendig ausgestaltet. Die Haftvermittlerschicht und die Außenschicht lassen sich gemäß weiter bevorzugter Ausführungsform gemeinsam auf das Innenrohr coextrudieren. Insgesamt kann die erfindungsgemäße Rohrleitung mit wenig aufwendigen Maßnahmen hergestellt werden und die Rohrleitung sowie das entsprechende Herstellungsverfahren ist auch in umwelttechnischer Hinsicht vorteilhaft.

Gemäß besonders bevorzugter Ausführungsform der Erfindung weist die Rohrleitung das Innenrohr und zumindest zwei (weitere) Schichten, vorzugsweise das Innenrohr und zwei (weitere) Schichten auf und zwar in folgendem Aufbau von innen nach außen: Innenrohr aus zumindest einem Metall, insbesondere aus Aluminium / Haftvermittlerschicht aus zumindest einem haftungsmodifizierten thermoplastischen Kunststoff, insbesondere aus zumindest einem haftungsmodifizierten Polypropylen und/oder aus zumindest einem haftungsmodifizierten Polyamid / Außenschicht aus zumindest einem thermoplastischen Kunststoff, insbesondere aus zumindest einem Polypropylen und/oder aus zumindest einem Polyamid. Als Polyamide für die Haftvermittlerschicht und/oder für die Außenschicht sind insbesondere Polyamid 6.12 und/oder Polyamid 12 bevorzugt.

Nachfolgend wird die Erfindung anhand einer lediglich ein Ausführungsbeispiel darstellenden Zeichnung näher erläutert. Es zeigen in schematischer Darstellung:

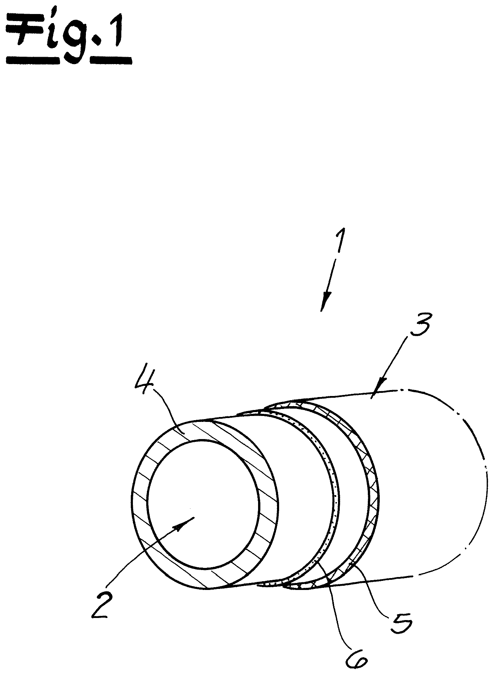

- Fig. 1: eine perspektivische Ansicht einer erfindungsgemäßen Kraftfahrzeug-Rohrleitung und

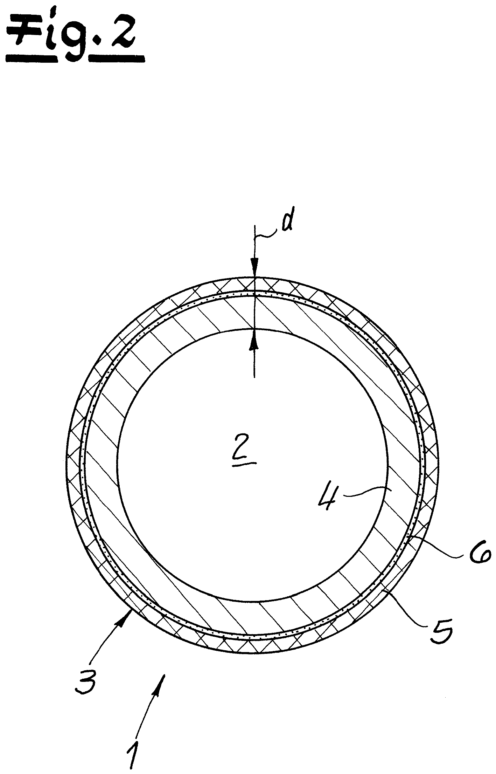

- Fig. 2: einen Schnitt durch den Gegenstand nach Figur 1.

Die Figuren zeigen eine erfindungsgemäße Kraftfahrzeug-Rohrleitung 1. Im Ausführungsbeispiel gemäß den Figuren mag es sich bei dieser Rohrleitung 1 um eine Bremsrohrleitung für Kraftfahrzeuge handeln. Die Rohrleitung 1 weist erfindungsgemäß einen Fluidkanal 2 und eine den Fluidkanal 2 umgebende Rohrwandung 3 auf. Durch die Rohrleitung 1 wird in dem Fluidkanal 2 ein fluides Medium, insbesondere eine Bremsflüssigkeit, geführt, das in den Figuren nicht näher dargestellt ist.

Die Rohrwandung 3 der in den Figuren dargestellten Rohrleitung 1 weist ein Innenrohr 4 aus zumindest einem Metall und eine das Innenrohr 4 ummantelnde Außenschicht 5 aus zumindest einem thermoplastischen Kunststoff auf. Zwischen dem Innenrohr 4 und der Außenschicht 5 ist zumindest eine, vorzugsweise und im Ausführungsbeispiel eine, Haftvermittlerschicht 6 aus zumindest einem thermoplastischen Kunststoff angeordnet, wobei der thermoplastische Kunststoff dieser Haftvermittlerschicht 6 haftungsmodifiziert ist. Vorzugsweise und im Ausführungsbeispiel gemäß den Figuren mag der thermoplastische Kunststoff der Haftvermittlerschicht 6 zur Haftungsmodifizierung zumindest ein Haftvermittlungsadditiv aufweisen.

Das Innenrohr 4 besteht vorzugsweise und im Ausführungsbeispiel gemäß den Figuren aus Aluminium bzw. im Wesentlichen aus Aluminium. Nach außen hin an das Innenrohr 4 schließt vorzugsweise und im Ausführungsbeispiel gemäß den Figuren die Haftvermittlerschicht 6 an. Bevorzugt ist der thermoplastische Kunststoff der Haftvermittlerschicht 6 zumindest ein Polyamid. Im Ausführungsbeispiel gemäß den Figuren mag es sich dabei um Polyamid 6.12 handeln. Sehr bevorzugt und im Ausführungsbeispiel gemäß den Figuren besteht die Haftvermittlerschicht 6 aus dem haftungsmodifizierten Polyamid 6.12 bzw. besteht im Wesentlichen aus dem haftungsmodifizierten Polyamid 6.12. Zur Haftungsmodifizierung des thermoplastischen Kunststoffes der

Haftvermittlerschicht 6 bzw. des Polyamids 6.12 mag der thermoplastische Kunststoff der Haftvermittlerschicht 6 bzw. das Polyamid 6.12 im Ausführungsbeispiel gemäß den Figuren und bevorzugt zumindest ein Silan als Haftvermittlungsadditiv aufweisen und sehr bevorzugt handelt es sich dabei um zumindest ein Aminosilan und ganz besonders bevorzugt um (3-Aminopropyl)trimethoxysilan. Bevorzugt weist der thermoplastische Kunststoff der Haftvermittlerschicht 6 bzw. das Polyamid 6.12 0,4 bis 4,0 Gew.-% des zumindest einen Haftvermittlungsadditivs bzw. des zumindest einen Aminosilans auf. Im Ausführungsbeispiel gemäß den Figuren mag der thermoplastische Kunststoff der Haftvermittlerschicht 6 bzw. die Haftvermittlerschicht 6 zur Haftungsmodifizierung 2,5 Gew.-% des Haftvermittlungsadditives bzw. des Aminosilans aufweisen.

Nach außen hin an die Haftvermittlerschicht 6 schließt bevorzugt und im Ausführungsbeispiel gemäß den Figuren die Außenschicht 5 an. Bevorzugt ist der zumindest eine thermoplastische Kunststoff der Außenschicht 5 zumindest ein Polyamid und ganz besonders bevorzugt und im Ausführungsbeispiel handelt es sich dabei um Polyamid 6.12. Vorzugsweise und im Ausführungsbeispiel gemäß den Figuren besteht die Außenschicht aus dem zumindest einem Polyamid bzw. aus Polyamid 6.12 bzw. besteht im Wesentlichen daraus.

Bevorzugt und im Ausführungsbeispiel ist die Außenschicht 5 die nach außen hin abschließende Schicht der Rohrleitung 1 und bildet das Innenrohr 4 nach innen hin den Abschluss der Rohrleitung 1. Gemäß bevorzugter Ausführungsform der Erfindung beträgt die Gesamtdicke d der Rohrwandung 3 800 µm bis 1200 µm. Im Ausführungsbeispiel gemäß den Figuren mag die Gesamtdicke d der Rohrwandung 3 etwa 1100 µm betragen. Zweckmäßigerweise und im Ausführungsbeispiel gemäß den Figuren ist die Wandungsdicke des Innenrohres 4 größer als die Schichtdicke der Außenschicht 5 und größer als die Schichtdicke der Haftvermittlerschicht 6. Weiter bevorzugt im Ausführungsbeispiel ist die Schichtdicke der Außenschicht 5 größer als die Schichtdicke der Haftvermittlerschicht 6. Es ist bevorzugt, dass die Schichtdicke der Haftvermittlerschicht 6 12 µm bis 50 µm beträgt. Bevorzugt und im Ausführungsbeispiel gemäß den Figuren mag die Schichtdicke der Haftvermittlerschicht 6 30 µm betragen. Weiter bevorzugt beträgt die Schichtdicke der Außenschicht 5 150 µm bis 180 µm. Im Ausführungsbeispiel gemäß den Figuren mag die Schichtdicke der Außenschicht 5 170 µm betragen. Es ist bevorzugt, dass das Innenrohr eine Wandungsdicke von 680 µm bis 1050 µm aufweist. Im Ausführungsbeispiel gemäß den Figuren und bevorzugt mag die Wandungsdicke des Innenrohres 4 900 µm betragen.

## Patentansprüche

1. Kraftfahrzeug-Rohrleitung (1), insbesondere Bremsrohrleitung für Kraftfahrzeuge, zur Durchleitung zumindest eines fluiden Mediums, wobei die Rohrleitung (1) einen Fluidkanal (2) und eine den Fluidkanal (2) umgebende Rohrwandung (3) aufweist, wobei die Rohrwandung (3) ein Innenrohr (4) aus zumindest einem Metall und eine das Innenrohr (4) ummantelnde Außenschicht (5) aus zumindest einem thermoplastischen Kunststoff aufweist, wobei zwischen dem Innenrohr (4) und der Außenschicht (5) zumindest eine Haftvermittlerschicht (6) aus zumindest einem thermoplastischen Kunststoff angeordnet ist, **dadurch gekennzeichnet, dass** der zumindest eine thermoplastische Kunststoff der Haftvermittlerschicht (6) haftungsmodifiziert ist und dazu zumindest eine in die Polymerstruktur eingebrachte Haftvermittlergruppe und/oder zumindest ein Haftvermittlungsadditiv aufweist.

2. Rohrleitung nach Anspruch 1, wobei das Innenrohr (4) Aluminium und/oder Zink und/oder Eisen enthält, wobei das Innenrohr (4) bevorzugt auf Basis von Aluminium und/oder auf Basis von Zink und/oder auf Basis von Eisen, insbesondere auf Basis von Stahl, ausgebildet ist, wobei das Innenrohr (4) sehr bevorzugt aus Aluminium und/oder aus Zink und/oder aus Eisen, insbesondere aus Stahl, besteht bzw. im Wesentlichen besteht und wobei das Innenrohr (4) ganz besonders bevorzugt aus Aluminium besteht bzw. im Wesentlichen besteht.

3. Rohrleitung nach einem der Ansprüche 1 oder 2, wobei der zumindest eine thermoplastische Kunststoff der Außenschicht (5) zumindest ein Polypropylen, insbesondere zumindest ein Homo-Polypropylen und/oder zumindest ein Polypropylen-Copolymer, ist und wobei die Außenschicht (5) vorzugsweise aus dem zumindest einen Polypropylen besteht bzw. im Wesentlichen besteht.

4. Rohrleitung nach einem der Ansprüche 1 bis 3, wobei der zumindest eine thermoplastische Kunststoff der Außenschicht (5) zumindest ein Polyamid ist, insbesondere zumindest ein aus der Gruppe: "Polyamid 6, Polyamid 10, Polyamid 11, Polyamid 12, Polyamid 6.6, Polyamid 6.10, Polyamid 6.12, Polyamid 6.16, Polyamid 10.10" ausgewähltes Polyamid ist, bevorzugt Polyamid 6.12 und/oder Polyamid 12 ist, und wobei die Außenschicht (5) vorzugsweise aus dem zumindest einen Polyamid besteht bzw. im Wesentlichen besteht.

5. Rohrleitung nach einem der Ansprüche 1 bis 4, wobei der zumindest eine thermoplastische Kunststoff der Haftvermittlerschicht (6) zumindest ein Polypropylen, insbesondere zumindest ein Homo-Polypropylen und/oder zumindest ein Polypropylen-Copolymer, ist.

6. Rohrleitung nach einem der Ansprüche 1 bis 5, wobei der zumindest eine thermoplastische Kunststoff der Haftvermittlerschicht (6) zumindest ein Polyamid ist, insbesondere zumindest ein aus der Gruppe: "Polyamid 6, Polyamid 10, Polyamid 11, Polyamid 12, Polyamid 6.6, Polyamid 6.10, Polyamid 6.12, Polyamid 6.16, Polyamid 10.10" ausgewähltes Polyamid ist und bevorzugt Polyamid 6.12 und/oder Polyamid 12 ist.

7. Rohrleitung nach einem der Ansprüche 1 bis 6, wobei das zumindest eine Haftvermittlungsadditiv zumindest ein aus der Gruppe: "Silane, halogenierte Polyolefine, insbesondere chlorierte Polyolefine, Acrylat-modifizierte Polyolefine, insbesondere Acrylat-modifiziertes Polypropylen und/oder Acrylat-modifiziertes Polyethylen" ausgewähltes Haftvermittlungsadditiv ist.

8. Rohrleitung nach einem der Ansprüche 1 bis 7, wobei das zumindest eine Haftvermittlungsadditiv zumindest ein Silan ist, wobei das Silan vorzugsweise zumindest ein aus der Gruppe: "Aminosilane, Epoxysilane, Vinylsilane" ausgewähltes Silan ist.

9. Rohrleitung nach einem der Ansprüche 1 bis 8, wobei der thermoplastische Kunststoff der Haftvermittlerschicht (6) 0,1 bis 8,0 Gew.-%, insbesondere 0,2 bis 6,0 Gew.-%, vorzugsweise 0,3 bis 5,0 Gew.-%, bevorzugt 0,35 bis 4,0 Gew.-%, besonders bevorzugt 0,4 bis 3,5 Gew.-%, sehr bevorzugt 0,5 bis 3,0 Gew.-%, des zumindest einen Haftvermittlungsadditives enthält.

10. Rohrleitung nach einem der Ansprüche 1 bis 9, wobei der zumindest eine thermoplastische Kunststoff der Haftvermittlerschicht (6) zumindest einen Füllstoff aufweist, wobei der zumindest eine Füllstoff bevorzugt ein Siliziumdioxid, insbesondere in Form von Siliziumdioxid-Nanopartikeln, und/oder ein Nanokompositmaterial ist.

11. Rohrleitung nach einem der Ansprüche 1 bis 10, wobei die zumindest eine Haftvermittlergruppe des thermoplastischen Kunststoffes der Haftvermittlerschicht (6) ausgewählt ist aus der Gruppe: "Hydroxygruppe, Acrylsäure, Acrylsäurederivat, insbesondere Acrylat, Maleinsäure, Maleinsäurederivat, insbesondere Maleinsäureanhydrid, Halogenid, Silan".

12. Rohrleitung nach einem der Ansprüche 1 bis 11, wobei die Schichtdicke der Haftvermittlerschicht (6) 7 µm bis 300 µm, vorzugsweise 10 µm bis 200 µm, bevorzugt 12 µm bis 100 µm, sehr bevorzugt 12 µm bis 50 µm, besonders bevorzugt 15 µm bis 40 µm, beträgt.

13. Rohrleitung nach einem der Ansprüche 1 bis 12, wobei die Schichtdicke der Außenschicht (5) 50 µm bis 300 µm, vorzugsweise 80 µm bis 250 µm, bevorzugt 100 µm bis 200 µm, besonders bevorzugt 150 µm bis 180 µm, beträgt.

14. Rohrleitung nach einem der Ansprüche 1 bis 13, wobei das Innenrohr (4) eine Wandungsdicke von 500 µm bis 1500 µm, vorzugsweise von 600 µm bis 1200 µm, bevorzugt von 650 µm bis 1100 µm, besonders bevorzugt von 680 µm bis 1050 µm, aufweist.

15. Rohrleitung nach einem der Ansprüche 1 bis 14, wobei die Gesamtdicke d der Rohrwandung (3) 500 µm bis 2000 µm, vorzugsweise 700 µm bis 1500 µm, bevorzugt 750 µm bis 1300 µm, besonders bevorzugt 800 µm bis 1200 µm, beträgt.

16. Verfahren zur Herstellung einer Kraftfahrzeug-Rohrleitung, insbesondere einer Rohrleitung (1) nach einem der Ansprüche 1 bis 15, wobei ein Innenrohr (4) aus zumindest einem Metall bereitgestellt wird, wobei auf eine Außenoberfläche des Innenrohrs (4) zumindest eine Haftvermittlerschicht (6) aus zumindest einem thermoplastischen Kunststoff aufextrudiert wird, wobei der zumindest eine thermoplastische Kunststoff der Haftvermittlerschicht (6) haftungsmodifiziert ist und dazu zumindest eine in die Polymerstruktur eingebrachte Haftvermittlergruppe und/oder zumindest ein Haftvermittlungsadditiv aufweist und wobei auf eine Außenoberfläche der Haftvermittlerschicht (6) zumindest eine Außenschicht (5) aus zumindest einem thermoplastischen Kunststoff aufgebracht, insbesondere aufextrudiert, wird und wobei die Haftvermittlerschicht (6) und die Außenschicht (5) bevorzugt coextrudiert werden.

## Geänderte Patentansprüche

### Geänderte Patentansprüche gemäss Regel 137(2) EPÜ.

1. Kraftfahrzeug-Rohrleitung (1), insbesondere Bremsrohrleitung für Kraftfahrzeuge, zur Durchleitung zumindest eines fluiden Mediums, wobei die Rohrleitung (1) einen Fluidkanal (2) und eine den Fluidkanal (2) umgebende Rohrwandung (3) aufweist, wobei die Rohrwandung (3) ein Innenrohr (4) aus zumindest einem Metall und eine das Innenrohr (4) ummantelnde Außenschicht (5) aus zumindest einem thermoplastischen Kunststoff aufweist, wobei zwischen dem Innenrohr (4) und der Außenschicht (5) zumindest eine Haftvermittlerschicht (6) aus zumindest einem thermoplastischen Kunststoff angeordnet ist, **dadurch gekennzeichnet, dass** der zumindest eine thermoplastische Kunststoff der Haftvermittlerschicht (6) haftungsmodifiziert ist und dazu zumindest eine in die Polymerstruktur eingebrachte Haftvermittlergruppe und/oder zumindest ein Haftvermittlungsadditiv aufweist und dass der zumindest eine thermoplastische Kunststoff der Haftvermittlerschicht (6) zumindest ein Polypropylen und/oder zumindest ein Polyamid ist.

2. Rohrleitung nach Anspruch 1, wobei das Innenrohr (4) Aluminium und/oder Zink und/oder Eisen enthält, wobei das Innenrohr (4) bevorzugt auf Basis von Aluminium und/oder auf Basis von Zink und/oder auf Basis von Eisen, insbesondere auf Basis von Stahl, ausgebildet ist, wobei das Innenrohr (4) sehr bevorzugt aus Aluminium und/oder aus Zink und/oder aus Eisen, insbesondere aus Stahl, besteht bzw. im Wesentlichen besteht und wobei das Innenrohr (4) ganz besonders bevorzugt aus Aluminium besteht bzw. im Wesentlichen besteht.

3. Rohrleitung nach einem der Ansprüche 1 oder 2, wobei der zumindest eine thermoplastische Kunststoff der Außenschicht (5) zumindest ein Polypropylen, insbesondere zumindest ein Homo-Polypropylen und/oder zumindest ein Polypropylen-Copolymer, ist und wobei die Außenschicht (5) vorzugsweise aus dem zumindest einen Polypropylen besteht bzw. im Wesentlichen besteht.

4. Rohrleitung nach einem der Ansprüche 1 bis 3, wobei der zumindest eine thermoplastische Kunststoff der Außenschicht (5) zumindest ein Polyamid ist, insbesondere zumindest ein aus der Gruppe: "Polyamid 6, Polyamid 10, Polyamid 11, Polyamid 12, Polyamid 6.6, Polyamid 6.10, Polyamid 6.12, Polyamid 6.16, Polyamid 10.10" ausgewähltes Polyamid ist, bevorzugt Polyamid 6.12 und/oder Polyamid 12 ist, und wobei die Außenschicht (5) vorzugsweise aus dem zumindest einen Polyamid besteht bzw. im Wesentlichen besteht.

5. Rohrleitung nach einem der Ansprüche 1 bis 4, wobei der zumindest eine thermoplastische Kunststoff der Haftvermittlerschicht (6) zumindest ein Homo-Polypropylen und/oder zumindest ein Polypropylen-Copolymer ist.

6. Rohrleitung nach einem der Ansprüche 1 bis 5, wobei der zumindest eine thermoplastische Kunststoff der Haftvermittlerschicht (6) zumindest ein aus der Gruppe: "Polyamid 6, Polyamid 10, Polyamid 11, Polyamid 12, Polyamid 6.6, Polyamid 6.10, Polyamid 6.12, Polyamid 6.16, Polyamid 10.10" ausgewähltes Polyamid ist und bevorzugt Polyamid 6.12 und/oder Polyamid 12 ist.

7. Rohrleitung nach einem der Ansprüche 1 bis 6, wobei das zumindest eine Haftvermittlungsadditiv zumindest ein aus der Gruppe: "Silane, halogenierte Polyolefine, insbesondere chlorierte Polyolefine, Acrylatmodifizierte Polyolefine, insbesondere Acrylat-modifiziertes Polypropylen und/oder Acrylat-modifiziertes Polyethylen" ausgewähltes Haftvermittlungsadditiv ist.

8. Rohrleitung nach einem der Ansprüche 1 bis 7, wobei das zumindest eine Haftvermittlungsadditiv zumindest ein Silan ist, wobei das Silan vorzugsweise zumindest ein aus der Gruppe: "Aminosilane, Epoxysilane, Vinylsilane" ausgewähltes Silan ist.

9. Rohrleitung nach einem der Ansprüche 1 bis 8, wobei der thermoplastische Kunststoff der Haftvermittlerschicht (6) 0,1 bis 8,0 Gew.-%, insbesondere 0,2 bis 6,0 Gew.-%, vorzugsweise 0,3 bis 5,0 Gew.-%, bevorzugt 0,35 bis 4,0 Gew.-%, besonders bevorzugt 0,4 bis 3,5 Gew.-%, sehr bevorzugt 0,5 bis 3,0 Gew.-%, des zumindest einen Haftvermittlungsadditives enthält.

10. Rohrleitung nach einem der Ansprüche 1 bis 9, wobei der zumindest eine thermoplastische Kunststoff der Haftvermittlerschicht (6) zumindest einen Füllstoff aufweist, wobei der zumindest eine Füllstoff bevorzugt ein Siliziumdioxid, insbesondere in Form von Siliziumdioxid-Nanopartikeln, und/oder ein Nanokompositmaterial ist.

11. Rohrleitung nach einem der Ansprüche 1 bis 10, wobei die zumindest eine Haftvermittlergruppe des thermoplastischen Kunststoffes der Haftvermittlerschicht (6) ausgewählt ist aus der Gruppe: "Hydroxygruppe, Acrylsäure, Acrylsäurederivat, insbesondere Acrylat, Maleinsäure, Maleinsäurederivat, insbesondere Maleinsäureanhydrid, Halogenid, Silan".

12. Rohrleitung nach einem der Ansprüche 1 bis 11, wobei die Schichtdicke der Haftvermittlerschicht (6) 7 µm bis 300 µm, vorzugsweise 10 µm bis 200 µm, bevorzugt 12 µm bis 100 µm, sehr bevorzugt 12 µm bis 50 µm, besonders bevorzugt 15 µm bis 40 µm, beträgt.

13. Rohrleitung nach einem der Ansprüche 1 bis 12, wobei die Schichtdicke der Außenschicht (5) 50 µm bis 300 µm, vorzugsweise 80 µm bis 250 µm, bevorzugt 100 µm bis 200 µm, besonders bevorzugt 150 µm bis 180 µm, beträgt.

14. Rohrleitung nach einem der Ansprüche 1 bis 13, wobei das Innenrohr (4) eine Wandungsdicke von 500 µm bis 1500 µm, vorzugsweise von 600 µm bis 1200 µm, bevorzugt von 650 µm bis 1100 µm, besonders bevorzugt von 680 µm bis 1050 µm, aufweist.

15. Rohrleitung nach einem der Ansprüche 1 bis 14, wobei die Gesamtdicke d der Rohrwandung (3) 500 µm bis 2000 µm, vorzugsweise 700 µm bis 1500 µm, bevorzugt 750 µm bis 1300 µm, besonders bevorzugt 800 µm bis 1200 µm, beträgt.

16. Verfahren zur Herstellung einer Kraftfahrzeug-Rohrleitung, insbesondere einer Rohrleitung (1) nach einem der Ansprüche 1 bis 15, wobei ein Innenrohr (4) aus zumindest einem Metall bereitgestellt wird, wobei auf eine Außenoberfläche des Innenrohrs (4) zumindest eine Haftvermittlerschicht (6) aus zumindest einem thermoplastischen Kunststoff aufextrudiert wird, wobei der zumindest eine thermoplastische Kunststoff der Haftvermittlerschicht (6) haftungsmodifiziert ist und dazu zumindest eine in die Polymerstruktur eingebrachte Haftvermittlergruppe und/oder zumindest ein Haftvermittlungsadditiv aufweist und wobei auf eine Außenoberfläche der Haftvermittlerschicht (6) zumindest eine Außenschicht (5) aus zumindest einem thermoplastischen Kunststoff aufgebracht, insbesondere aufextrudiert, wird, wobei die Haftvermittlerschicht (6) und die Außenschicht (5) bevorzugt coextrudiert werden und wobei der zumindest eine thermoplastische Kunststoff der Haftvermittlerschicht (6) zumindest ein Polypropylen und/oder zumindest ein Polyamid ist.
